# FASCICULE DE BREVET EUROPEEN

(11) **EP 2 178 726 B1**
(45) Date de publication et mention de la délivrance du brevet: **15.06.2011**
(21) Numéro de dépôt: 08806153.6
(22) Date de dépôt: 02.07.2008
(51) Int. Cl.: B60S 1/38

(54) **RACLETTE D'ESSUYAGE POUR BALAI D'ESSUIE-VITRES D'AUTOMOBILES, COMPORTANT UNE PARTIE D'ARTICULATION**
WISCHBLATT MIT BEWEGLICHEM TEIL FÜR EINEN FAHRZEUGSCHEIBENWISCHER
WIPER BLADE FOR VEHICLE WINDOW WIPER, COMPRISING AN ARTICULATED PART

(30) Priorité: 12.07.2007 FR 0756451
(43) Date de publication de la demande: 28.04.2010
(73) Titulaire: Peugeot Citroën Automobiles SA, 78140 Vélizy-Villacoublay (FR)
(72) Inventeur: JEUFFE, Gérard, F-78580 Bazemont (FR); MAGNIER, Nicolas, F-92140 Clamart (FR)
(86) Numéro de dépôt international: PCT/FR2008/051229
(87) Numéro de publication internationale: WO 2009/007647

(56) Documents cités:
- EP-A- 0 620 142
- EP-A- 1 591 330
- DE-A1-102005 053 811
- FR-A- 2 884 205

## Description

La présente invention est relative à une raclette d'essuyage pour balai d'essuie-vitres de véhicule automobile.

On connaît des raclettes d'essuyage pour balai d'essuie-vitres de véhicule automobile comportant :
- un talon de fixation au bras d'un balai d'essuie-vitres ;
- une lèvre d'essuyage ;
- une partie flexible d'articulation reliant la lèvre au talon, la lèvre s'étendant selon un plan axial médian de la raclette, et la partie d'articulation comprenant deux parois flexibles incurvées sensiblement symétriques l'une de l'autre par rapport à ce plan et définissant un évidement entre elles et le talon, et
- une butée faisant saillie du talon dans l'évidement, symétrique par rapport audit plan, et prévu pour recevoir en appui les parois et ainsi limiter les déformations en flexion de la partie d'articulation.

Dans les raclettes d'essuyage connues de ce type, la partie d'articulation peut être soumise à des déformations importantes en particulier lorsque le pare-brise est de forme complexe et qu'il comporte des défauts ou des irrégularités de surface. Les déformations nécessaires à un bon essuyage du pare-brise sont rendues possibles par la partie flexible d'articulation. Cependant, ces déformations doivent rester limitées, notamment pour que la raclette ne s'écrase pas trop lorsqu'elle est soumise à des efforts importants. C'est pour cela que l'on dispose à l'intérieur de l'évidement, une butée en saillie du talon destinée à recevoir en appui les parois de la partie d'articulation et ainsi limiter les déformations en flexion de cette partie d'articulation. Lors de déformations importantes de la partie flexible d'articulation, il se produit des chocs et des frottements entre cette partie d'articulation et la butée. Ces chocs et ces frottements génèrent des bruits ainsi que des défauts d'essuyage. Afin de réduire ce bruit et de limiter l'effet des chocs de la partie d'articulation sur la butée, on a proposé par exemple dans la demande de brevet FR 05 03 538, de réaliser une butée reliée au talon de fixation au bras du balai d'essuie-vitres par une âme flexible s'étendant sensiblement dans le plan de symétrie du balai d'essuie-vitres.

Cette technique a l'avantage de réduire les nuisances acoustiques générées par les raclettes d'essuyage. Cependant elle présente l'inconvénient d'être mal adaptée à toutes les situations d'essuyage. En effet, le coefficient de frottement de la raclette d'essuyage sur le pare-brise dépend très fortement du degré de mouillage de celui-ci. De ce fait, ou bien la raclette d'essuyage est trop rigide pour avoir un comportement satisfaisant lorsque le pare-brise est bien mouillé, ou bien la raclette d'essuyage est trop flexible pour avoir un comportement satisfaisant lorsque le pare-brise est peu mouillé.

Le but de la présente invention est de remédier à ces inconvénients en proposant une raclette d'essuyage pour balai d'essuie-glaces qui soit bien adaptée à l'essuyage de pare-brises de forme complexe tout en ayant un comportement satisfaisant aussi bien lorsque le pare-brise est bien humide que lorsque le pare-brise est peu mouillé.

A cet effet, l'invention a pour objet une raclette d'essuyage pour balai d'essuie-vitres de véhicule automobile, comportant un talon de fixation à un balai d'essuie-vitres, une lèvre d'essuyage, une partie flexible d'articulation reliant la lèvre au talon, la lèvre s'étendant selon un plan axial médian de la raclette, et la partie d'articulation comprenant deux parois flexibles incurvées sensiblement symétriques l'une de l'autre par rapport à ce plan, et définissant un évidement entre elles et le talon, et une butée interne faisant saillie du talon dans l'évidement, sensiblement symétrique par rapport audit plan, et prévue pour recevoir en appui les parois et ainsi limiter les déformations en flexion de la partie d'articulation, ladite butée interne ayant une âme flexible s'étendant sensiblement dans ledit plan de symétrie, la raclette comportant en outre des moyens formant butées externes s'étendant de part et d'autre de la lèvre d'essuyage, et prévues pour recevoir en butée la lèvre d'essuyage et, ainsi, limiter le basculement latéral de la lèvre d'essuyage.

De préférence, au moins un moyen formant butée externe est attachée à la paroi flexible de la partie d'articulation entre le talon et la lèvre d'essuyage.

Ce moyen formant butée externe est, par exemple, une lame inclinée en direction de la lèvre d'essuyage en formant avec le plan médian de la lèvre d'essuyage un angle compris entre 35 ° et 55 °, et de préférence entre 42 ° et 48 °, et dont l'extrémité est, de préférence, arrondie.

De préférence, l'épaisseur de la lame qui constitue le moyen formant butée externe est égale à l'épaisseur de la paroi flexible de la partie d'articulation située entre le talon et la butée externe.

De préférence, l'épaisseur de la paroi flexible située entre la lèvre d'essuyage et le moyen formant butée externe est inférieure à l'épaisseur de la paroi flexible située entre le moyen formant butée externe et le talon.

De préférence, l'attache du moyen formant butée externe à la paroi flexible de la partie d'articulation est plus proche du pied de la lèvre d'essuyage que de l'attache de la paroi flexible avec le talon.

De préférence, les deux moyens formant butée externe sont sensiblement symétriques par rapport au plan médian de la lèvre au repos.

Dans un mode de réalisation possible, le pied de la lèvre d'essuyage est de section généralement triangulaire, la base du triangle étant située à la jonction avec la paroi flexible de la partie d'articulation.

Dans un autre mode de réalisation, la lèvre d'essuyage comprend une surépaisseur entre la jonction avec la paroi flexible et l'extrémité libre de la lèvre d'essuyage, et l'épaisseur de la lèvre d'essuyage à la jonction avec la paroi flexible est plus faible que l'épaisseur de la partie en surépaisseur de la lèvre d'essuyage.

De préférence la raclette d'essuyage est obtenue par un procédé d'extrusion.

L'invention concerne également un balai d'essuyage de véhicule automobile pourvu d'une raclette d'essuyage pour balai d'essuie-vitres de véhicule automobile, comportant un talon de fixation à un balai d'essuie-vitres, une lèvre d'essuyage, une partie flexible d'articulation reliant la lèvre au talon, la lèvre s'étendant selon un plan axial médian de la raclette et la partie d'articulation comprenant deux parois flexibles incurvées sensiblement symétriques l'une de l'autre par rapport à ce plan et définissant un évidement entre elles et le talon, et une butée interne faisant saillie du talon dans l'évidement, sensiblement symétrique par rapport audit plan et prévue pour recevoir en appui les parois et ainsi limiter les déformations en flexion de la partie d'articulation, ladite butée interne ayant une âme flexible s'étendant sensiblement dans ledit plan de symétrie, la raclette comportant en outre des moyens formant butée externe s'étendant de part et d'autre de la lèvre d'essuyage et prévus pour recevoir en butée la lèvre d'essuyage et, ainsi, limiter le basculement latéral de la lèvre d'essuyage.

L'invention va maintenant être décrite de façon plus précise mais non limitative en regard des figures annexées dans lesquelles :
- la figure 1 est une vue en section transversale d'une raclette d'essuyage en appui sur la surface d'un pare-brise de véhicule automobile, la raclette d'essuyage étant au repos ;
- la figure 2 est une vue en section transversale de la raclette d'essuyage de la figure 1 en cours de fonctionnement sur un pare-brise très humide ;
- la figure 3 est une vue analogue à la vue de la figure 1, représentant une raclette d'essuyage en fonctionnement sur un pare-brise peu humide ;
- la figure 4 est une vue en section transversale d'un deuxième mode de réalisation d'une raclette d'essuyage en appui sur la surface d'un pare-brise de véhicule automobile, la raclette d'essuyage étant au repos.

De façon connue en elle-même, une raclette d'essuyage pour balai d'essuie-vitres, est un élément allongé obtenu par moulage ou par extrusion d'un matériau élastomère tel que du caoutchouc. La raclette d'essuyage étant essentiellement caractérisée par sa section transversale, dans la suite on ne décrira que la section transversale d'une raclette.

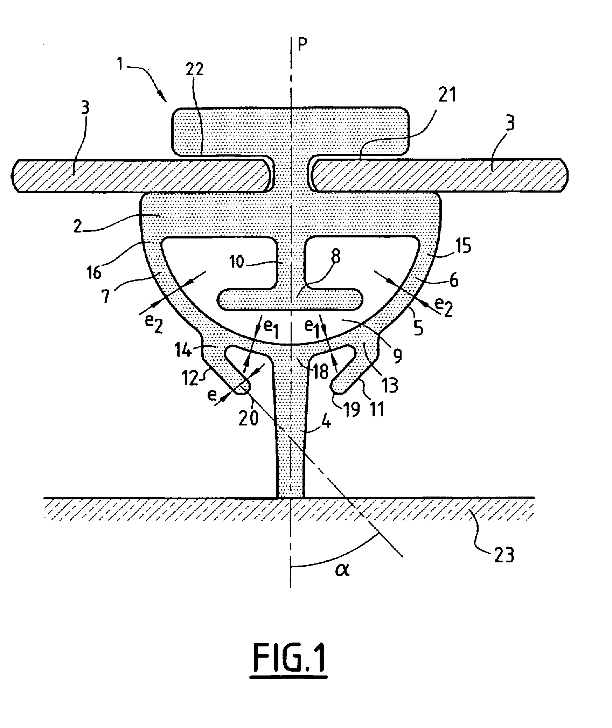

La raclette repérée généralement par 1 à la figure 1 comporte un talon 2 de fixation au balai d'essuie-vitres 3 par l'intermédiaire de gorges 21 et 22, et une lèvre d'essuyage 4 reliée au talon 2 par une partie flexible d'articulation 5 creuse comportant deux parois flexibles incurvées 6 et 7 sensiblement symétriques l'une de l'autre par rapport au plan de symétrie P de la section de la raclette d'essuyage. Une butée interne 8 disposée à l'intérieur de l'espace creux 9 situé à l'intérieur de la partie flexible de l'articulation 5, est reliée au talon 2 par une âme flexible 10. De part et d'autre de la lèvre d'essuyage 4, des moyens formant des butées externes 11 et 12 sont prévus et sont attachés par des pieds 13 et 14 aux parois flexibles incurvées 6 et 7, à des distances intermédiaires entre d'une part les points d'attache 15 ou 16 des parois flexibles 6 ou 7 avec le talon, et d'autre part le pied 18 de la lèvre d'essuyage qui correspond au point d'attache de cette lèvre avec les parois flexibles incurvées.

L'épaisseur e1 de la partie des parois flexibles située entre le pied 18 de la lèvre d'essuyage et les points d'attache 13 ou 14 des butées externes avec les parois flexibles, est inférieure à l'épaisseur e2 de la partie des parois flexibles incurvées s'étendant entre les points d'attache des butées externes et les attaches 15 et 16 avec le talon. Ainsi en ajustant les épaisseurs relatives e1 et e2 des deux parties des parois flexibles, on peut ajuster le comportement en flexion de ces parois. De même le comportement en flexion des parois peut être ajusté en choisissant convenablement la position des points de jonction 13 et 14 des butées extérieures avec les parois incurvées flexibles.

Les butées externes flexibles 11 et 12 sont des lames qui s'étendent parallèlement à la longueur de la raclette et qui ont des faces planes inclinées par rapport au plan médian P de la raclette d'un angle α compris entre 35° et 55°, et de préférence entre 43° et 48°, et mieux encore sensiblement égal à 45°. En outre, l'extrémité 19 ou 20 de chaque butée 11 ou 12, destinée à venir au contact de la lèvre d'essuyage, est arrondie. En outre, et de préférence, l'épaisseur e de la lame qui constitue une butée est sensiblement égale à l'épaisseur e2 de la partie de la paroi flexible incurvée située entre le point d'attache de la butée et l'attache avec le talon.

Dans le mode de réalisation représenté ici le pied de la lèvre d'essuyage 18 est de section généralement triangulaire de telle sorte que la base du triangle est située à la jonction avec la paroi flexible de la partie d'articulation. Ainsi, cette jonction est plus épaisse que l'extrémité libre de la lèvre d'essuyage.

La raclette représentée à la figure 1 est représentée au repos, en appui sur une vitre de pare-brise 23.

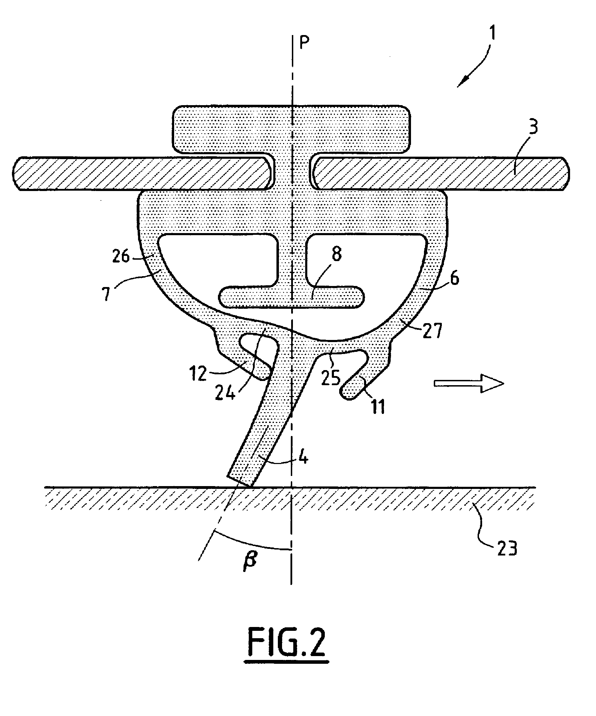

A la figure 2, on a représenté la raclette d'essuyage qui vient d'être décrite en déplacement de la gauche vers la droite sur un pare-brise qui est très humide de telle sorte que le coefficient de frottement de la lèvre d'essuyage sur le pare-brise est faible. Dans cette situation comme on le voit sur la figure, la lèvre d'essuyage 4 est inclinée par rapport au plan médian P de la raclette d'essuyage d'un angle β pas trop important qui résulte de la flexion des différentes parties des parois flexibles incurvées 6 et 7, de telle sorte que la lèvre d'essuyage vient au contact de la butée externe 12 alors que les parois flexibles incurvées de la partie d'articulation ne vienne pas au contact de la butée interne 8. Cette inclinaison limitée de la lèvre d'essuyage sous l'effet d'un effort de frottement pas trop important est rendue possible par l'épaisseur réduite des parties 24 et 25 des parois flexibles incurvées se situant entre les pieds des butées externes et le pied de la lèvre d'essuyage et le fait que l'épaisseur des parties 26 et 27 des parois flexibles incurvées se situant entre les butées externes et le talon de fixation de la raclette est relativement importante, ce qui limite leurs déformations.

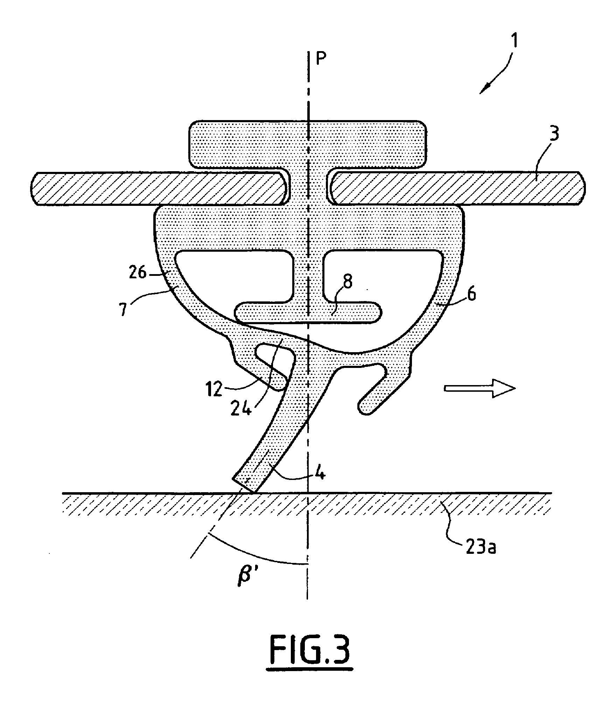

A la figure 3, on a représenté la raclette d'essuyage en déplacement contre une vitre de pare-brise 23a peu mouillée de telle sorte que le coefficient de frottement de la lèvre d'essuyage contre la vitre est relativement important. Dans ce mode de fonctionnement, la lèvre d'essuyage 4 subit un effort plus important que dans le cas précédent si bien que la déformation des parois incurvées flexibles 6 et 7 est plus importante que dans le cas précédent. Il en résulte que l'angle β' que forme la lèvre d'essuyage avec le plan P est plus important que dans le cas précédent. Cependant, la lèvre d'essuyage venant au contact de la butée externe 12, la partie 24 de la paroi flexible incurvée située entre le pied de la lèvre d'essuyage et la butée externe 12 contre laquelle la lèvre d'essuyage s'appuie, ne se déforme pas alors que la partie de la même paroi flexible 7 située entre l'attache de la butée externe 12 et le talon de fixation de la raclette à un bras d'essuyage, se déforme de façon plus importante. De ce fait, la paroi incurvée flexible 7 vient au contact de la butée interne 8 ce qui limite la déformation de la raclette.

Avec la raclette qui vient d'être décrite on obtient donc deux comportements distincts selon que le coefficient de frottement de la raclette sur le pare-brise est faible ou important. Ces comportements sont adaptés à chacun des modes de fonctionnement de telle sorte que la déformation de la lèvre d'essuyage est adaptée aux conditions de fonctionnement de l'essuie-vitres.

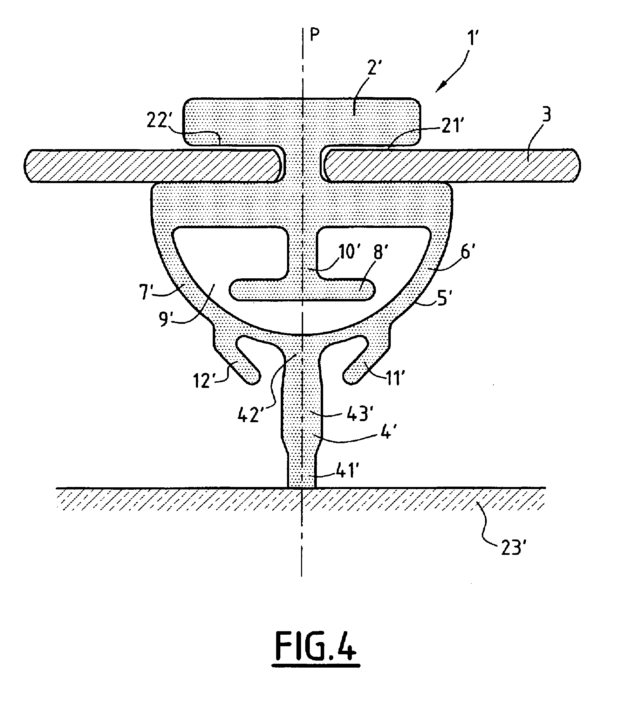

A la figure 4 on a représenté une variante de réalisation de la raclette d'essuyage suivant l'invention. Comme dans le cas précédent la raclette d'essuyage repérée généralement par 1' comporte un talon 2' muni de gorges 21' et 22' destinées à fixer le talon sur un balai d'essuie-glaces 3. La raclette d'essuyage comporte également une lèvre d'essuyage 4' qui est reliée au talon 2' par une partie flexible d'articulation 5' creuse constituée de parois flexibles incurvées 6' et 7' sur lesquelles sont disposées des butées externes 11' et 12'. Comme dans le cas précédent également une butée interne 8' disposée à l'intérieur de la partie creuse 9' de la partie flexible d'articulation, est reliée au talon par une nervure flexible 10'. Ce mode de réalisation se distingue du précédent par la forme de la lèvre d'essuyage qui comporte une extrémité libre mince 41', une zone de liaison 42' avec les parois flexibles incurvées 6' et 7' qui a une épaisseur faible et qui, en outre, comprend une zone en surépaisseur 43' disposée entre la zone de jonction avec la partie flexible d'articulation et l'extrémité 41' qui vient au contact d'une surface de pare-brise 23'.

Avec ce mode de réalisation particulier de la section de la lèvre d'essuyage, il est possible d'ajuster le comportement en flexion de cette lèvre d'essuyage c'est-à-dire d'avoir un corps de lèvre d'essuyage relativement rigide mais qui soit relié par une zone plus souple avec la partie d'articulation.

La raclette conforme à l'invention a l'avantage de s'adapter à des pare-brises ayant des formes complexes et présentant des irrégularités, aussi bien lorsque le pare-brise est très humide que lorsqu'il l'est peu, tout en limitant les bruits qui sont associés au choc des différents éléments de la raclette contre les butées.

## Revendications

1. Raclette d'essuyage (1, 1') pour balai d'essuie-vitres de véhicule automobile, comportant
- un talon de fixation (2, 2') à un balai (3) d'essuie-vitres,
- une lèvre d'essuyage (4, 4'),
- une partie flexible d'articulation (5, 5') reliant la lèvre au talon, la lèvre s'étendant selon un plan axial médian (P) de la raclette, et la partie d'articulation comprenant deux parois flexibles (6, 7 ; 6', 7') incurvées sensiblement symétriques l'une de l'autre par rapport à ce plan, et définissant un évidement (9, 9') entre elles et le talon, et
- une butée interne (8, 8') faisant saillie du talon dans l'évidement, sensiblement symétrique par rapport audit plan, et prévue pour recevoir en appui les parois et ainsi limiter les déformations en flexion de la partie d'articulation, ladite butée interne ayant une âme flexible (10, 10') s'étendant sensiblement dans ledit plan de symétrie,
**caractérisée en ce que** la raclette d'essuyage comporte des moyens formant butée externe (11, 12 ; 11 ', 12') s'étendant de part et d'autre de la lèvre d'essuyage (4, 4'), et prévus pour recevoir en butée la lèvre d'essuyage.

2. Raclette d'essuyage selon la revendication 1, **caractérisée en ce que** au moins un moyen formant butée externe (11, 12 ; 11', 12') est attaché à la paroi flexible (6, 7 ; 6', 7') de la partie d'articulation (5, 5') entre le talon et la lèvre d'essuyage.

3. Raclette d'essuyage selon la revendication 2 **caractérisée en ce que** le moyen formant butée externe (11, 12) est une lame inclinée en direction de la lèvre d'essuyage en formant avec le plan médian de la lèvre d'essuyage un angle compris entre 35 ° et 55 °, et de préférence entre 42 ° et 48 °.

4. Raclette d'essuyage selon la revendication 3, **caractérisée en ce que** l'extrémité (19, 20) du moyen formant butée externe est arrondie.

5. Raclette selon la revendication 3 ou la revendication 4, **caractérisée en ce que** l'épaisseur (e) de la lame qui constitue le moyen formant butée externe (12) est sensiblement égale à l'épaisseur (e2) de la paroi flexible (7) de la partie d'articulation (5) située entre le talon (2) et la butée externe (12).

6. Raclette selon l'une quelconque des revendications 2 à 5, **caractérisée en ce que** l'épaisseur (e1) de la paroi flexible (7) située entre la lèvre d'essuyage (4) et le moyen formant butée externe (12) est inférieure à l'épaisseur (e2) de la paroi flexible (7) située entre la butée externe (12) et le talon (2).

7. Raclette selon l'une quelconque des revendications 2 à 6, **caractérisée en ce que** l'attache (13, 14) du moyen formant butée externe à la paroi flexible (6, 7) de la partie d'articulation (5) est plus proche du pied (18) de la lèvre d'essuyage (4) que de l'attache (15, 16) de la paroi flexible (6, 7) avec le talon (2).

8. Raclette selon l'une quelconque des revendications 2 à 7, **caractérisée en ce que** les deux moyens formant butée externe (11, 12 ; 11', 12') sont sensiblement symétriques par rapport au plan médian (P) de la lèvre au repos.

9. Raclette selon l'une quelconque des revendications 1 à 8, **caractérisée en ce que** le pied (18) de la lèvre d'essuyage (4) est de section généralement triangulaire, la base du triangle étant située à la jonction avec la paroi flexible (6, 7) de la partie d'articulation (5).

10. Raclette selon l'une quelconque des revendications 1 à 8, **caractérisée en ce que** la lèvre d'essuyage (4') comprend une surépaisseur (43') entre la jonction (42') avec la paroi flexible (5') et l'extrémité libre (41') de la lèvre d'essuyage (4'), et **en ce que** l'épaisseur de la lèvre d'essuyage à la jonction (42') avec la paroi flexible est plus faible que l'épaisseur de la partie en surépaisseur (43') de la lèvre d'essuyage.

11. Raclette d'essuyage selon l'une quelconque des revendications 1 à 10, **caractérisée en ce qu'**elle est obtenue par un procédé d'extrusion.

12. Balai d'essuie-vitres de véhicule automobile, comportant une raclette d'essuyage selon la revendication 1.

## Claims

1. A squeegee (1, 1') for windscreen wiper blade of an automotive vehicle, comprising
- a heel (2, 2') for fixing to a windscreen wiper blade (3),
- a wiper lip (4, 4')
- a flexible linking part (5, 5') connecting the lip to the heel, the lip extending along a median axial plane (P) of the squeegee, and the linking part comprising two curved flexible walls (6, 7; 6', 7'), which are substantially symmetrical to one another with respect to this plane, and defining a recess (9, 9') between said walls and the heel, and
- an internal stopper (8, 8') projecting from the heel into the recess, substantially symmetrical with respect to said plane, and provided to support the walls and thus limit bending strains of the linking part, said internal stopper having a flexible core (10, 10') extending substantially in said plane of symmetry,
**characterised in that** the squeegee comprises external stopper means (11, 12; 11', 12') extending on either side of the wiper lip (4, 4') and provided to be abutted by the wiper lip.

2. The squeegee according to claim 1, **characterised in that** at least one external stopper means(11, 12; 11', 12') is attached to the flexible wall (6, 7; 6', 7') of the linking part (5, 5') between the heel and the wiper lip.

3. The squeegee according to claim 2, **characterised in that** the external stopper means (11, 12) is a blade tilted towards the wiper lip so as to form an angle of between 35°and 55°, preferably between 42° and 48°, with the median plane of the wiper lip.

4. The squeegee according to claim 3, **characterised in that** the end (19, 20) of the external stopper means is rounded.

5. The squeegee according to either claim 3 or claim 4, **characterised in that** the thickness (t) of the blade which constitutes the external stopper means (12) is substantially equal to the thickness (t2) of the flexible wall (7) of the linking part (5) located between the heel (2) and the external stopper (12).

6. The squeegee according to any of claims 2 to 5, **characterised in that** the thickness (t1) of the flexible wall (7) located between the wiper lip (4) and the external stopper means (12) is less than the thickness (t2) of the flexible wall (7) located between the external stopper (12) and the heel (2).

7. The squeegee according to any of claims 2 to 6, **characterised in that** the fastening (13, 14) between the external stopper means and the flexible wall (6, 7) of the linking part (5) is closer to the foot (18) of the wiper lip (4) than to the fastening (15, 16) between the flexible wall (6, 7) and the heel (2).

8. The squeegee according to any of claims 2 to 7, **characterised in that**, at rest, the two external stopper means (11, 12; 11', 12') are substantially symmetrical with respect to the median plane (P) of the lip.

9. The squeegee according to any of claims 1 to 8, **characterised in that** the foot (18) of the wiper lip (4) is of a generally triangular cross-section, the base of the triangle being located at the junction with the flexible wall (6, 7) of the linking part (5).

10. The squeegee according to any of claims 1 to 8, **characterised in that** the wiper lip (4') comprises a widened part (43') between the junction (42') with the flexible wall (5') and the free end (41') of the wiper lip (4'), and **in that** the thickness of the wiper lip at the junction (42') with the flexible wall is less than the thickness of the widened part (43') of the wiper lip.

11. The squeegee according to any of claims 1 to 10, **characterised in that** it is obtained by an extrusion process.

12. A windscreen wiper blade of an automotive vehicle, comprising a squeegee according to claim 1.

## Patentansprüche

1. Wischblatt (1, 1') für einen Scheibenwischerarm eines Kraftfahrzeugs, umfassend
- einen Ansatz (2, 2') zur Befestigung an einem Scheibenwischerarm (3),
- eine Wischlippe (4, 4')
- einen biegsamen Gelenkteil (5, 5'), der die Lippe mit dem Ansatz verbindet, wobei sich die Lippe entlang einer mittleren axialen Ebene (P) des Wischblatts erstreckt und wobei der Gelenkteil zwei biegsame Wände (6, 7; 6', 7') umfasst, die in Bezug auf diese Ebene zueinander im Wesentlichen symmetrisch gekrümmt sind und eine Aussparung (9, 9') zwischen sich und dem Ansatz definieren, und
- einen inneren Anschlag (8, 8'), der vom Ansatz in die Aussparung in Bezug auf die Ebene im Wesentlichen symmetrisch hervorragt und dafür vorgesehen ist, die Wände als Auflager aufzunehmen und somit die Biegeverformungen des Gelenkteils zu begrenzen, wobei der innere Anschlag einen biegsamen Steg (10, 10') besitzt, der sich im Wesentlichen in der Symmetrieebene erstreckt,
**dadurch gekennzeichnet, dass** das Wischblatt Mittel aufweist, die einen äußeren Anschlag (11, 12; 11', 12') bilden, der sich zu beiden Seiten der Wischlippe (4, 4') erstreckt und dafür vorgesehen ist, die Wischlippe im Anschlag aufzunehmen.

2. Wischblatt nach Anspruch 1, **dadurch gekennzeichnet, dass** mindestens ein Mittel, das einen äußeren Anschlag (11, 12; 11', 12') bildet, an der biegsamen Wand (6, 7; 6', 7') des Gelenkteils (5, 5') zwischen dem Ansatz und der Wischlippe angebracht ist.

3. Wischblatt nach Anspruch 2, **dadurch gekennzeichnet, dass** das den äußeren Anschlag (11, 12) bildende Mittel ein in Richtung der Wischlippe geneigtes Blatt ist, wobei es mit der mittleren Ebene der Wischlippe einen Winkel zwischen 35° und 55° und bevorzugt zwischen 42° und 48° bildet.

4. Wischblatt nach Anspruch 3, **dadurch gekennzeichnet, dass** das Ende (19, 20) des Mittels, das den äußeren Anschlag bildet, abgerundet ist.

5. Wischblatt nach Anspruch 3 oder Anspruch 4, **dadurch gekennzeichnet, dass** die Dicke (e) des Blattes, das das den äußeren Anschlag (12) bildende Mittel bildet, im Wesentlichen gleich der Dicke (e2) der biegsamen Wand (7) des Gelenkteils (5) ist, die sich zwischen dem Ansatz (2) und dem äußeren Anschlag (12) befindet.

6. Wischblatt nach einem der Ansprüche 2 bis 5, **dadurch gekennzeichnet, dass** die Dicke (e1) der biegsamen Wand (7), die sich zwischen der Wischlippe (4) und dem den äußeren Anschlag (12) bildenden Mittel befindet, kleiner ist als die Dicke (e2) der biegsamen Wand (7), die sich zwischen dem äußeren Anschlag (12) und dem Ansatz (2) befindet.

7. Wischblatt nach einem der Ansprüche 2 bis 6, **dadurch gekennzeichnet, dass** sich die Befestigung (13, 14) des den äußeren Anschlag bildenden Mittelsan der biegsamen Wand (6, 7) des Gelenkteils (5) näher am Fuß (18) der Wischlippe (4) befindet als an der Befestigung (15, 16) der biegsamen Wand (6, 7) am Ansatz (2).

8. Wischblatt nach einem der Ansprüche 2 bis 7, **dadurch gekennzeichnet, dass** die beiden den äußeren Anschlag (11, 12; 11', 12') bildenden Mittel in Ruhestellung in Bezug auf die mittlere Ebene (P) der Lippe im Wesentlichen symmetrisch sind.

9. Wischblatt nach einem der Ansprüche 1 bis 8, **dadurch gekennzeichnet, dass** der Fuß (18) der Wischlippe (4) einen allgemein dreieckigen Querschnitt aufweist, wobei sich die Grundlinie des Dreiecks an der Verbindung mit der biegsamen Wand (6, 7) des Gelenkteils (5) befindet.

10. Wischblatt nach einem der Ansprüche 1 bis 8, **dadurch gekennzeichnet, dass** die Wischlippe (4') eine Verdickung (43') zwischen der Verbindung (42') mit der biegsamen Wand (5') und dem freien Ende (41') der Wischlippe (4') umfasst, und **dadurch**, dass die Dicke der Wischlippe an der Verbindung (42') mit der biegsamen Wand geringer ist als die Dicke des Teils der Wischlippe mit der Verdickung (43').

11. Wischblatt nach einem der Ansprüche 1 bis 10, **dadurch gekennzeichnet, dass** es durch ein Extrusionsverfahren erhalten wird.

12. Scheibenwischerarm eines Kraftfahrzeugs, der ein Wischblatt gemäß Anspruch 1 aufweist.
